# EUROPÄISCHE PATENTSCHRIFT

(11) **EP 3 303 858 B1**
(45) Veröffentlichungstag und Bekanntmachung des Hinweises auf die Patenterteilung: **07.08.2019**
(21) Anmeldenummer: 16726043.9
(22) Anmeldetag: 19.05.2016
(51) Int. Cl.: F16B 37/02, F16B 37/04, F16B 5/06

(54) **VORRICHTUNG ZUM BEFESTIGEN EINES ANBAUTEILES AN EINEM TRÄGERTEIL**
DEVICE FOR MOUNTING AN ATTACHMENT PART TO A CARRIER PART
DISPOSITIF DE FIXATION D'UNE PIÈCE RAPPORTÉE SUR UNE PIÈCE DE SUPPORT

(30) Priorität: 01.06.2015 DE 102015108620
(43) Veröffentlichungstag der Anmeldung: 11.04.2018
(73) Patentinhaber: A. Raymond et Cie, 38000 Grenoble (FR)
(72) Erfinder: BINKERT, Sven, 79540 Lörrach (DE)
(74) Vertreter: Tilmann, Max Wilhelm
(86) Internationale Anmeldenummer: PCT/EP2016/061266
(87) Internationale Veröffentlichungsnummer: WO 2016/193013

(56) Entgegenhaltungen:
- EP-A1- 0 220 526
- EP-A1- 0 870 938
- DE-A1-102004 052 332
- GB-A- 2 099 099
- US-A- 2 140 064
- US-A1- 2011 311 331

## Beschreibung

Die Erfindung betrifft eine Vorrichtung zum Befestigen eines Anbauteiles an einem Trägerteil mit einem ersten Schenkel sowie mit einem zweiten Schenkel, wobei die Schenkel endseitig über einen ersten Verbindungsabschnitt miteinander verbunden sind, mit einer Kopfplatte, die über einen dem ersten Verbindungsabschnitt gegenüber liegenden zweiten Verbindungsabschnitt mit dem zweiten Schenkel verbunden ist, wobei die Kopfplatte mit einer Gewindestruktur ausgestattet ist, und mit einem Niederhalter zum Begrenzen der Bewegung des der zweiten Verbindungsstruktur gegenüber liegenden Endes der Kopfplatte von dem ersten Schenkel weg.

Eine derartige Vorrichtung ist aus US 2011/0311331 A1 bekannt. Diese vorbekannte Vorrichtung zum Befestigen eines Anbauteiles an einem Trägerteil verfügt über einen ersten Schenkel sowie über einen zweiten Schenkel. Die Schenkel sind endseitig über einen ersten Verbindungsabschnitt miteinander verbunden. Weiterhin ist eine mit einer Gewindestruktur ausgestattete Kopfplatte vorhanden, die über einen dem ersten Verbindungsabschnitt gegenüber liegenden zweiten Verbindungsabschnitt mit dem zweiten Schenkel verbunden ist. Die Kopfplatte ist dabei in einem von zwei Randarmen begrenzten Freischnitt des zweiten Schenkels angeordnet. Ein dem zweiten Verbindungsabschnitt gegenüberliegend an dem ersten Schenkel angeformter, ambossartig ausgebildeter Niederhalter dient zum Begrenzen der Bewegung des der zweiten Verbindungsstruktur gegenüber liegenden Endes der Kopfplatte von dem ersten Schenkel weg.

Der Erfindung liegt die Aufgabe zugrunde, eine Vorrichtung der eingangs genannten Art anzugeben, die sich bei einer hohen Auszugsfestigkeit einer mit der Vorrichtung verbundenen Befestigungsschraube durch eine einfache Herstellbarkeit und Handhabbarkeit auszeichnet.

Diese Aufgabe wird bei einer Vorrichtung der eingangs genannten Art erfindungsgemäß dadurch gelöst, dass eine Anschlagstruktur vorhanden ist, die die Bewegung der Kopfplatte in Richtung des zweiten Schenkels begrenzt.

Dadurch, dass bei der erfindungsgemäßen Vorrichtung die Bewegung der Kopfplatte nunmehr sowohl von dem zweiten Schenkel weg als auch auf den zweiten Schenkel hin begrenzt ist, ist die Position der Gewindestruktur verhältnismäßig genau festgelegt, so dass die Auszugsfestigkeit einer Befestigungsschraube oder die Handhabbarkeit der erfindungsgemäßen Vorrichtung beeinträchtigende Fehlstellungen der Gewindestruktur ausgeschlossen sind.

Bei einer zweckmäßigen Weiterbildung der erfindungsgemäßen Vorrichtung trägt der zweite Schenkel eine der Gewindestruktur der Kopfplatte gegenüber liegende weitere Gewindestruktur, wobei die Anschlagstruktur die Gewindestrukturen in einem Abstand voneinander hält, der ein ordnungsgemäßes Eindrehen einer Schraube in beide Gewindestrukturen mit einem üblichen Drehmoment gestattet. Dieser verhältnismäßig einfache Aufbau führt zu einem Eingriff einer Befestigungsschraube mit zwei in einem definierten Abstand voneinander angeordneten Gewindestrukturen, so dass sich bei einer Eindrehbarkeit der Befestigungsschraube mit einem verhältnismäßig geringen und definierten Drehmoment eine besonders hohe Auszugsfestigkeit der Befestigungsschraube ergibt.

Bei einer weiteren zweckmäßigen Weiterbildung der erfindungsgemäßen Vorrichtung weist die Anschlagstruktur einen Anschlagabschnitt einer Verblockungseinheit auf, die an der Kopfplatte angeformt ist, wobei sich der Anschlagabschnitt von der Kopfplatte in Richtung des zweiten Schenkels erstreckt und in wenigstens einem Stoßbereich mit einer Stirnseite dem zweiten Schenkel gegenüber liegt. Dadurch lässt sich das Zusammenwirken der Anschlagstruktur und des Niederhalters sehr einfach aufeinander abstimmen.

Bei einer zweckmäßigen Ausgestaltung der vorgenannten Weiterbildung weist der Niederhalter eine L-artige Niederhalterzunge auf, und an den Anschlagabschnitt ist auf seiner der Kopfplatte abgewandten Seite ein Überlappabschnitt der Verblockungseinheit angeformt, der von einem Endabschnitt der Niederhalterzunge überdeckt ist. Daraus ergibt sich ein besonders einfaches Abstimmen des Zusammenwirkens der Anschlagstruktur und des Niederhalters.

Bei einer zweckmäßigen Ausführung der vorgenannten Ausgestaltung weist der erste Verbindungsabschnitt zwei Verbindungsarme auf, die in einem Abstand voneinander angeordnet sind und zwischen denen die Niederhalterzunge angeordnet ist. Dies führt zu einer sehr materialsparenden und wenig raumgreifenden Ausgestaltung.

Bei einer weiteren zweckmäßigen Weiterbildung der erfindungsgemäßen Vorrichtung ist der zweite Verbindungsabschnitt an einer von dem ersten Schenkel wegweisend angestellten Anstellzunge des zweiten Schenkels angeformt. Dadurch lässt sich der Abstand der Kopfplatte von dem zweiten Schenkel sehr einfach festlegen.

Weitere zweckmäßige Ausgestaltungen und Vorteile der Erfindung ergeben sich aus der nachfolgenden Beschreibung eines Ausführungsbeispiels mit Bezug auf die Figuren der Zeichnung.

Es zeigen:
- Fig. 1: in einer perspektivischen Ansicht ein Ausführungsbeispiel einer erfindungsgemäßen Vorrichtung in einer auf ein Trägerteil aufgeschobenen Anordnung,
- Fig. 2: in einer Schnittansicht das Ausführungsbeispiel gemäß Fig. 1 mit dem Trägerteil und
- Fig. 3: in einer Schnittansicht das Ausführungsbeispiel gemäß Fig. 1 mit einem Trägerteil und mit einem Anbauteil, das über eine in die erfindungsgemäße Vorrichtung eingeschraubte Befestigungsschraube an dem Trägerteil befestigt ist.

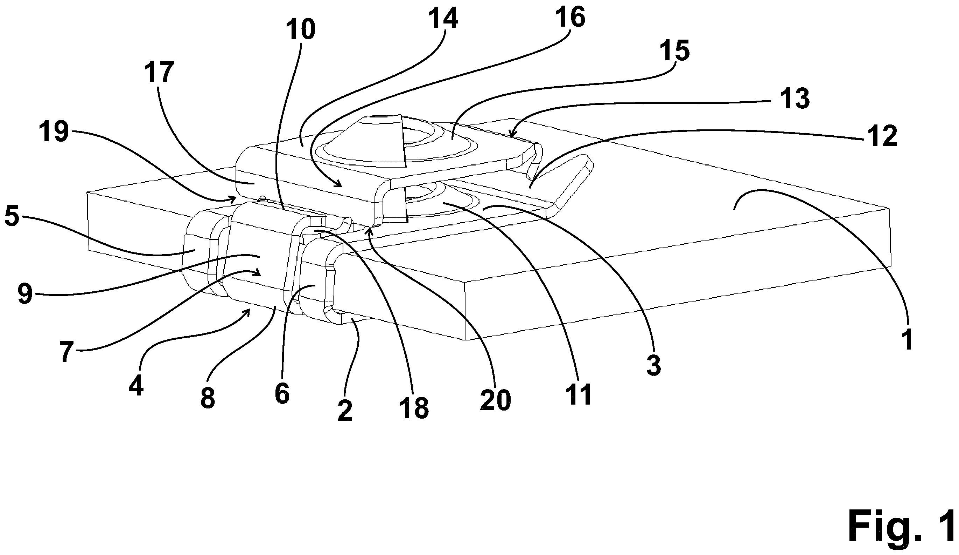

Fig. 1 zeigt in einer perspektivischen Ansicht ein Ausführungsbeispiel einer vorzugsweise als Stanz-Biege-Teil aus einem Metallblech einstückig hergestellten erfindungsgemäßen Vorrichtung in einer auf ein plattenartig ausgebildetes Trägerteil 1 randseitig aufgeschobenen Anordnung. Das Ausführungsbeispiel gemäß Fig. 1 verfügt als ersten Schenkel über einen plattenartig ausgebildeten Bodenschenkel 2, der in der Darstellung gemäß Fig. 1 auf der dem Betrachter abgewandten flachen Seite des Trägerteils 1 angeordnet ist. Weiterhin ist das Ausführungsbeispiel gemäß Fig. 1 mit einem ebenfalls plattenartig ausgestalteten Deckschenkel 3 als zweiten Schenkel ausgebildet, der dem Bodenschenkel 2 in einem Abstand gegenüberliegend und in der Anordnung gemäß Fig. 1 auf der dem Betrachter zugewandten flachen Seite des Trägerteils 1 angeordnet ist.

Der Bodenschenkel 2 und der Deckschenkel 3 sind an ihren in der Darstellung gemäß Fig. 1 dem Betrachter zugewandten Enden über einen ersten Verbindungsabschnitt 4 miteinander verbunden, der einen ersten Verbindungsarm 5 und einen zweiten Verbindungsarm 6 aufweist. Die Verbindungsarme 5, 6 sind im Wesentlichen rechtwinklig oder leicht schräg zu dem Bodenschenkel 2 sowie zu dem Deckschenkel 3 ausgerichtet und in einem seitlichen Abstand voneinander angeordnet.

An dem in der Darstellung gemäß Fig. 1 dem Betrachter zugewandten Ende des Bodenschenkels 2 ist an dem Bodenschenkel 2 eine Niederhalterzunge 7 eines Niederhalters angeformt, die einen mit dem Bodenschenkel 2 in Verbindung stehenden Anbindungsabschnitt 8, einen bei der Herstellung materialsparend zwischen den Verbindungsarmen 5, 6 liegenden Zwischenabschnitt 9 und einen in etwa rechtwinklig zu dem Zwischenabschnitt 9 ausgerichteten, in Richtung des Deckschenkels 3 weisenden Endabschnitt 10 aufweist, was der Niederhalterzunge 7 eine L-artige Gestalt verleiht.

Der Deckschenkel 3 verfügt in seinem Mittenbereich als Gewindestruktur über eine Verprägung 11 im Sinne einer in etwa kegelstumpfartigen Materialausbuchtung mit einem entlang eines Gewindeabschnitts helixartig verlaufenden Rand. Auf der dem ersten Verbindungsabschnitt 4 gegenüberliegenden Ende trägt der Deckschenkel 3 weiterhin eine Anstellzunge 12, die von dem Bodenschenkel 2 wegweisend schräg angestellt ist.

An der Anstellzunge 12 wiederum ist in einem Endbereich über einen zweiten Verbindungsabschnitt 13 eine Kopfplatte 14 angeformt, die dem Deckschenkel 3 in einem Abstand gegenüber liegt und die sich von dem zweiten Verbindungsabschnitt 13 in Richtung des ersten Verbindungsabschnitts 4 erstreckt. Die Kopfplatte 14 trägt in ihrem Mittenbereich ebenfalls eine Verprägung 15, die entsprechend der Verprägung 11 des Deckschenkels 3 ausgebildet ist.

Weiterhin ist an der Kopfplatte 14 an ihrem dem zweiten Verbindungsabschnitt 13 gegenüber liegenden Ende eine Verblockungseinheit 16 angeformt. Die Verblockungseinheit 16 weist einen sich in Richtung des Deckschenkels 3 erstreckenden, verhältnismäßig breiten Anschlagabschnitt 17 als Anschlagstruktur und einen gegenüber dem Anschlagabschnitt 17 schmaleren, in einem Freischnitt des Deckschenkels 3 im Bereich des ersten Verbindungsabschnitts 4 liegenden Überlappabschnitt 18 auf, der von dem Endabschnitt 10 der Niederhalterzunge 7 überdeckt ist.

Die seitlich über den Überlappabschnitt 18 überstehenden Kanten des Anschlagabschnitts 17 stoßen in Stoßbereichen 19, 20 an den Deckschenkel 3 an, so dass die Bewegung der Kopfplatte 14 auf den Deckschenkel 3 zu begrenzt ist. Durch das Überdecken des Überlappabschnitts 18 der Verblockungseinheit 16 durch den Endabschnitt 10 der Niederhalterzunge 7 ist die Bewegung der Kopfplatte 14 von dem Deckschenkel 3 weg ebenfalls begrenzt, so dass bei einer zweckmäßigerweise spielfreien Begrenzung der Bewegbarkeit der Kopfplatte 14 in diesen beiden Richtungen in Bezug auf den Deckschenkel 3 die Verprägungen 11, 15 in einem festen Abstand voneinander angeordnet sind.

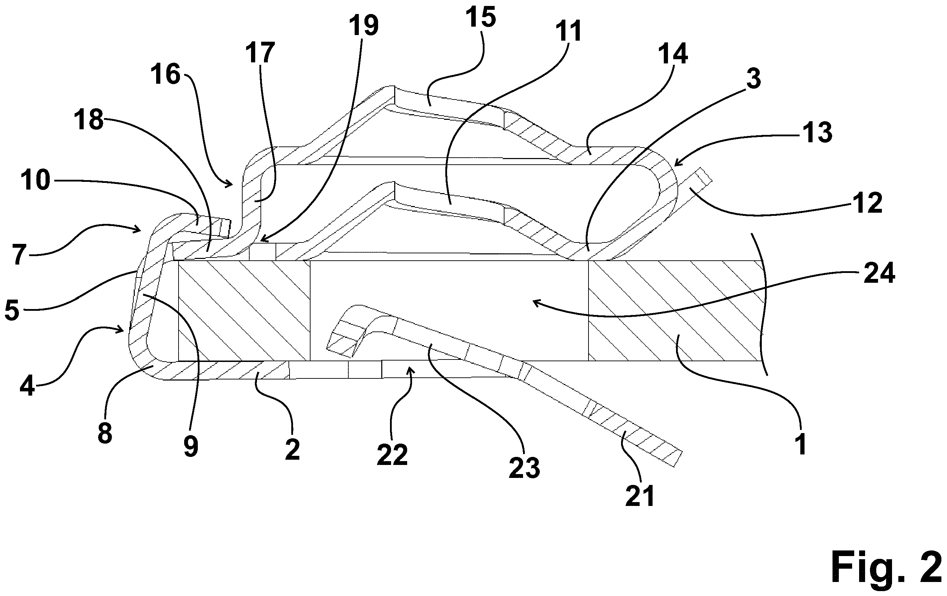

Fig. 2 zeigt in einer Schnittansicht das Ausführungsbeispiel gemäß Fig. 1 mit dem Trägerteil 1. Aus Fig. 2 ist ersichtlich, dass an dem Bodenschenkel 2 an seinem dem ersten Verbindungsabschnitt 4 abgewandten Ende eine Anstellzunge 21 ausgebildet ist, die von dem Deckschenkel 3 weg weisend angestellt ist. Dadurch lässt sich das Ausführungsbeispiel einer erfindungsgemäßen Vorrichtung gemäß Fig. 1 sehr einfach auf ein Trägerteil 1 aufschieben. Weiterhin ist an dem Bodenschenkel 2 der Anstellzunge 21 gegenüber liegend im Bereich einer Bodenschenkelausnehmung 22 eine Vorfixierzunge 23 angeformt, die sich schräg in Richtung des Deckschenkels 3 erstreckt.

Das Trägerteil 1 ist mit einer in einem Randabstand angeordneten Trägerteilausnehmung 24 ausgebildet, in die bei bestimmungsgemäßer Anordnung des Ausführungsbeispiels gemäß Fig. 1 die Vorfixierzunge 23 eintritt und zusammen mit einer gewissen Vorspannung, die durch eine in relaxierter Anordnung leicht schiefwinklige Ausrichtung des Deckschenkels 3 in Bezug auf den Bodenschenkel 2 nach Aufschieben auf das Trägerteil 1 erzeugt ist, das Ausführungsbeispiel gemäß Fig. 1 gegen ein unbeabsichtigtes Abstreifen zuverlässig an dem Trägerteil 1 hält. Die Verprägungen 11, 15 liegen in Längsrichtung der Trägerteilausnehmung 23.

Weiterhin lässt sich der Darstellung gemäß Fig. 2 entnehmen, dass der Endabschnitt 10 der zweckmäßigerweise zum Feinabstimmen des Anschlags in Richtung der Kopfplatte 14 neigbaren und hier geringfügig geneigten Niederhalterzunge 7 mit seiner Randkante auf dem Überlappabschnitt 18 der Verblockungseinheit 16 eine Bewegung der Kopfplatte 14 von dem Deckschenkel 3 weg blockierend aufliegt, so dass in Verbindung mit dem Zusammenwirken des Deckschenkels 3 und des Anschlagabschnitts 17 in den Stoßbereichen 19, 20 die Kopfplatte 14 in einem festen Abstand zu dem Deckschenkel 3 fixiert ist.

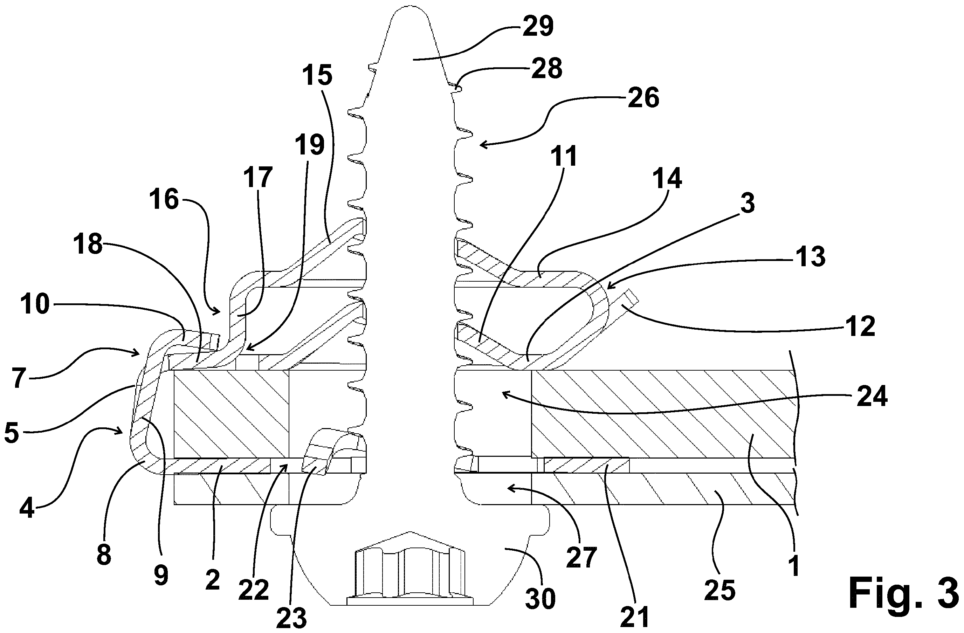

Fig. 3 zeigt in einer Schnittansicht das Ausführungsbeispiel gemäß Fig. 1 mit einem Trägerteil 1 und mit einem Anbauteil 25, das über eine in die Verprägungen 11, 15 des erläuterten Ausführungsbeispiels einer erfindungsgemäßen Vorrichtung eingeschraubte Befestigungsschraube 26 an dem Trägerteil 1 befestigt ist. In befestigter Anordnung des Anbauteiles 25 an dem Trägerteil 1 ist das Anbauteil 25 mit einer in dem Anbauteil 25 ausgebildeten Anbauteilausnehmung 27 im Bereich der Bodenschenkelausnehmung 22 auf der dem Trägerteil 1 abgewandten Seite des Bodenschenkels 2 angeordnet. Die Befestigungsschraube 26 greift mit einem ein spiralförmiges Außengewinde 28 aufweisenden Schraubenschaft 29 durch die Anbauteilausnehmung 27, die Bodenschenkelausnehmung 22 und die Trägerteilausnehmung 24 durch und ist mit dem Außengewinde 28 in die in einem für das Außengewinde 28 im Rahmen der Periodizität des Außengewindes 28 im Wesentlichen versatzfrei angeordneten und damit Innengewindestrukturen bildenden Verprägungen 11, 15 eingeschraubt.

Bei dem Einschrauben der Befestigungsschraube 26 kann die an der Kopfplatte 14 ausgebildete Verprägung 15 aufgrund des Anschlags des Überlappabschnitts 18 der Verblockungseinheit 16 an den Endabschnitt 10 der Niederhalterzunge 7 auch bei Anstoßen der Spitze des Schraubenschafts 29 beispielsweise aufgrund einer Schrägstellung der Befestigungsschraube 26 nicht von dem Deckschenkel 3 weg ausweichen, so dass die Gefahr eines Verkantens der Befestigungsschraube 26 beim Einschrauben weitestgehend vermieden ist.

Durch diesen Eingriff des Außengewindes 28 der Befestigungsschraube 26 mit zwei für das Außengewinde 26 durchgehende Innengewindestrukturen bildenden Verprägungen 11, 15 ergibt sich zum einen eine drehmomentarme, im Wesentlichen ungehinderte Einschraubbarkeit in die verhältnismäßig einfach herstellbaren Verprägungen 11, 15, die auch verhältnismäßig hohen Anzugsmomenten der Befestigungsschraube 26 bei Anlage eines Schraubenkopfes 30 der Befestigungsschraube 26 an der dem Trägerteil 1 abgewandten Seite des Anbauteiles 25 widerstehen.

## Patentansprüche

1. Vorrichtung zum Befestigen eines Anbauteiles (25) an einem Trägerteil (1) mit einem ersten Schenkel (2) sowie mit einem zweiten Schenkel (3), wobei die Schenkel (2, 3) endseitig über einen ersten Verbindungsabschnitt (4) miteinander verbunden sind, mit einer Kopfplatte (14), die über einen dem ersten Verbindungsabschnitt (4) gegenüber liegenden zweiten Verbindungsabschnitt (13) mit dem zweiten Schenkel (3) verbunden ist, wobei die Kopfplatte (14) mit einer Gewindestruktur (15) ausgestattet ist, und mit einem Niederhalter (7) zum Begrenzen der Bewegung des dem zweiten Verbindungsabschnitt (13) gegenüber liegenden Endes der Kopfplatte (14) von dem ersten Schenkel (3) weg, **dadurch gekennzeichnet, dass** eine Anschlagstruktur (17) vorhanden ist, die die Bewegung der Kopfplatte (14) auf den zweiten Schenkel (3) zu begrenzt.

2. Vorrichtung nach Anspruch 1, **dadurch gekennzeichnet, dass** der zweite Schenkel (3) eine der Gewindestruktur (15) der Kopfplatte (14) gegenüber liegende weitere Gewindestruktur (11) trägt und dass die Anschlagstruktur (17) die Gewindestrukturen (11, 15) in einem Abstand voneinander hält, der ein ordnungsgemäßes Eindrehen einer Befestigungsschraube (26) in beide Gewindestrukturen (11, 15) mit einem üblichen Drehmoment gestattet.

3. Vorrichtung nach Anspruch 1 oder Anspruch 2, **dadurch gekennzeichnet, dass** die Anschlagstruktur einen Anschlagabschnitt (17) einer Verblockungseinheit (16) aufweist, die an der Kopfplatte (14) angeformt ist, wobei sich der Anschlagabschnitt (17) von der Kopfplatte (14) in Richtung des zweiten Schenkels (3) erstreckt und in wenigstens einem Stoßbereich (19, 20) mit einer Stirnseite dem zweiten Schenkel (3) gegenüber liegt.

4. Vorrichtung nach Anspruch 3, **dadurch gekennzeichnet, dass** der Niederhalter eine L-artige Niederhalterzunge (7) aufweist und dass an den Anschlagabschnitt (17) auf seiner der Kopfplatte (14) abgewandten Seite ein Überlappabschnitt (18) der Verblockungseinheit (16) angeformt ist, der von einem Endabschnitt (10) der Niederhalterzunge (7) überdeckt ist.

5. Vorrichtung nach Anspruch 4, **dadurch gekennzeichnet, dass** der erste Verbindungsabschnitt (4) zwei Verbindungsarme (5, 6) aufweist, die in einem Abstand voneinander angeordnet sind und zwischen denen die Niederhalterzunge (7) angeordnet ist.

6. Vorrichtung nach einem der Ansprüche 1 bis 5, **dadurch gekennzeichnet, dass** der zweite Verbindungsabschnitt (13) an einer von dem ersten Schenkel (2) weg weisend angestellten Anstellzunge (12) ausgebildet ist, die dem ersten Verbindungsabschnitt (4) gegenüber liegend an dem zweiten Schenkel (3) angeformt ist.

## Claims

1. Device for fitting an attachment part (25) to a support part (1) with a first leg (2) as well as with a second leg (3), wherein the legs (2, 3) are connected with each other at their ends via a first connection section (4), with a header plate (14), which is connected with the second leg (3) via a second connection section (13) lying opposite the first connection section (4), wherein the header plate (14) is equipped with a thread structure (15), and with a hold-down device (7) for limiting the movement of the end of the header plate (14) lying opposite the second connection section (13) away from the first leg (3), **characterised in that** a shoulder structure (17) is provided, which delimits the movement of the header plate (14) towards the second leg (3).

2. Device according to claim 1, **characterised in that** the second leg (3) supports a further thread structure (11) lying opposite the thread structure (15) of the header plate (14), and **in that** the shoulder structure (17) holds the thread structures (11, 15) at a distance from each other, which allows a correct screwing in of a fitting screw (26) into both thread structures (11, 15) with a conventional torque.

3. Device according to claim 1 or claim 2, **characterised in that** the shoulder structure has an abutment section (17) of a blocking unit (16) formed on the header plate (14), wherein the abutment section (17) extends from the header plate (14) in the direction of the second leg (3) and lies opposite the second leg (3) with one facing side in at least one joint area (19, 20).

4. Device according to claim 3, **characterised in that** the hold-down device has an L-shaped hold-down tongue (7) and **in that** an overlapping section (18) of the blocking unit (16) is formed on its side facing away from the header plate (14) provided on the abutment section (17), which is covered by an end section (10) of the hold-down tongue (7).

5. Device according to claim 4, **characterised in that** the first connection section (4) has two connection arms (5, 6) arranged at a distance from each other, and between which the hold-down tongue (7) is arranged.

6. Device according to one of the claims 1 to 5, **characterised in that** the second connection section (13) is formed on an angled angle tab (12) facing away from the first leg (2), which is formed on the second leg (3) lying opposite the first connection section (4).

## Revendications

1. Dispositif pour la fixation d'une pièce rapportée (25) à une partie de support (1) avec une première tige (2) ainsi qu'avec une deuxième tige (3), les tiges (2, 3) étant reliées ensemble côté extrémité par une première section de liaison (4), avec une plaque supérieure (14) qui est reliée à la deuxième tige (3) par une deuxième section de liaison (13) disposée en face de la première section de liaison (4), la plaque supérieure (14) étant dotée d'une structure filetée (15), et avec un élément de maintien (7) pour limiter le mouvement de l'extrémité, opposée à la deuxième section de liaison (13), de la plaque supérieure (14) par rapport à la première tige (3), **caractérisé en ce qu'**une structure d'arrêt (17) est présente limitant le mouvement de la plaque supérieure (14) en direction de la deuxième tige (3).

2. Dispositif selon la revendication 1, **caractérisé en ce que** la deuxième tige (3) supporte une autre structure filetée (11) opposée à la structure filetée (15) de la plaque supérieure (14) et **en ce que** la structure d'arrêt (17) maintient les structures filetées (11, 15) à une distance qui permet un vissage correct d'une vis de fixation (26) dans les deux structures filetées (11, 15) avec un couple habituel.

3. Dispositif selon la revendication 1 ou la revendication 2, **caractérisé en ce que** la structure d'arrêt présente une section d'arrêt (17) d'une unité de blocage (16) qui est formée sur la plaque supérieure (14), la section d'arrêt (17) s'étendant de la plaque supérieure (14) en direction de la deuxième tige (3) et se situe en face de la deuxième tige (3) dans au moins une zone de choc (19, 20) avec une face avant.

4. Dispositif selon la revendication 3, **caractérisé en ce que** l'élément de maintien présente une languette d'élément de maintien (7) en L et **en ce qu'**à la section d'arrêt (17) une section de chevauchement (18) de l'unité de blocage (16) est formée sur son côté opposé de la plaque supérieure (14), ladite section étant recouverte par une section d'extrémité (10) de la languette d'élément de maintien (7).

5. Dispositif selon la revendication 4, **caractérisé en ce que** la première section de liaison (4) présente deux bras de liaison (5, 6) qui sont disposés à une distance l'un de l'autre et entre lesquels est disposée la languette d'élément de maintien (7).

6. Dispositif selon l'une des revendications 1 à 5, **caractérisé en ce que** la deuxième section de liaison (13) est formée sur une languette d'appui (12) engagée loin de la première tige (2), ladite languette d'appui étant formée sur la deuxième tige (3) opposée à la première section de liaison (4).
